# EUROPEAN PATENT APPLICATION

(11) **EP 4 144 436 A1**
(43) Date of publication of application: **08.03.2023**
(21) Application number: 21797163.9
(22) Date of filing: 27.04.2021
(51) Int. Cl.: B01J 23/28, B01J 31/22, C09D 7/61, C09D 7/63, C09D 167/00

(54) **CURING CATALYST AND RESIN COMPOSITION**

(30) Priority: 30.04.2020 JP 2020080608
(71) Applicant: Koei Chemical Company, Limited, Sodegaura-shi, Chiba 299-0266 (JP)
(72) Inventor: INOUE Naohito, Sodegaura-shi, Chiba 299-0266 (JP); TAGATA Tsuyoshi, Sodegaura-shi, Chiba 299-0266 (JP); MIYAGI Motoyoshi, Sodegaura-shi, Chiba 299-0266 (JP)
(74) Representative: Herzog IP Patentanwalts GmbH
(86) International application number: PCT/JP2021/016748
(87) International publication number: WO 2021/221047

(57) **Abstract**

The present invention provides a curing catalyst which promotes a reaction between a hydroxyalkyl amide-based curing agent and a carboxy group-containing resin, especially curing of a carboxy group-containing resin-based powder coating material using a hydroxyalkyl amide-based curing agent, and in particular, curing of a polyester resin-based powder coating material. A curing catalyst which promotes a reaction between a carboxy group-containing resin and a compound that has a β-hydroxyalkyl amide group, said curing catalyst containing a compound that contains, as a metal atom, at least one element selected from the group consisting of Mo, Cr, V, Fe, Co, Ni, Ga, Zr, In, Ba, Ce and Bi. It is preferable that the metal atom is an Mo atom. An Al atom may be included as the metal atom.

## Description

### TECHNICAL FIELD

The present invention relates to a curing catalyst and a resin composition.

### BACKGROUND ART

Coating materials that do not emit organic solvents or the like have conventionally attracted attention in view of the influence on the environment and the human body. For example, there have been proposed techniques relating to the development of aqueous coating materials, in which the organic solvent is replaced with water, and a powder coating material that contains no solvent. Examples of the powder coating material include epoxy resin-based, acrylic resin-based, carboxy-group-containing resin-based (for example, polyester resin-based, etc.), vinyl resin-based powder coating materials, and the like. Among these, the carboxy-group-containing resin-based powder coating material has attracted attention because of its well-balanced coating film performance.

An isocyanate-based curing agent is known as a curing agent for use in the carboxy-group-containing resin-based powder coating material, but it has a problem that a blocking agent generated upon the curing of a coating film causes smoke and tar. Further, a triglycidyl isocyanurate-based curing agent contains no blocking agent, but is not preferable from the viewpoint of safety due to its effects on the human body, such as skin irritation and mutagenesis. On the other hand, a hydroxyalkylamide-based curing agent generates water alone upon the curing of the coating film, and therefore is preferable from the viewpoint of its effect on the environment (for example, Patent Document 1, Nonpatent Document 1).
Patent Document 1: Japanese Unexamined Patent Application, Publication No. 2001-254048
Non-Patent Document 1: "Low-Temperature-Curing Powder Coatings System", Paint & Coatings Industry, 2018, October

### DISCLOSURE OF THE INVENTION

### Problems to be Solved by the Invention

A carboxy-group-containing resin-based powder coating material containing a hydroxyalkylamide-based curing agent is considered to be curable by baking at relatively low temperature. However, for example, when a thick steel sheet or the like is an object to be coated, a large amount of heat and time are required to sufficiently transfer heat to the coating material and the object to be coated. For this reason, there has been a demand for a technique for promoting the curing of the coating material. However, no curing catalyst that promotes the curing of the carboxy-group-containing resin-based powder coating material containing a hydroxyalkylamide-based curing agent has been proposed thus far. In addition, in the studies conducted by the present inventors, conventional esterification-reaction-promoting catalysts were ineffective for promoting the reaction of the hydroxyalkylamide-based curing agent with the carboxy-group-containing resin, but on the contrary resulted in retardation of the reaction.

The present invention has been made in view of the above problems, and an object of the present invention is to provide a curing catalyst that promotes the reaction of a hydroxyalkylamide-based curing agent with a carboxy-group-containing resin, especially the curing of a carboxy-group-containing resin-based powder coating material containing a hydroxyalkylamide-based curing agent, in particular, the curing of a polyester resin-based powder coating material. Means for Solving the Problems

A first aspect of the present invention relates to a curing catalyst for promoting the reaction of a compound having a β-hydroxyalkylamide group with a carboxy-group-containing resin, the curing catalyst containing a compound including at least one selected from the group consisting of Mo, Cr, V, Fe, Co, Ni, Ga, Zr, In, Ba, Ce, and Bi as a metal atom.

A second aspect of the present invention relates to the curing catalyst according to the first aspect, wherein the curing catalyst is any one of a metal oxide, a metal sulfide, a chloride, a lithium salt, a sodium salt, a potassium salt, an ammonium salt, a phosphate salt, a silicate salt, an acetate salt or a hydrate thereof, wherein the metal oxide, the metal sulfide, the chloride, the lithium salt, the sodium salt, the potassium salt, the ammonium salt, the phosphate salt, the silicate salt, and the acetate salt include the metal atom.

Further, a third aspect of the present invention relates to a curing catalyst for promoting the reaction of a compound having a β-hydroxyalkylamide group with a carboxy-group-containing resin, wherein the curing catalyst contains a metal complex having at least one metal atom selected from the group consisting of Mo, Cr, Al, V, Fe, Co, Ni, Ga, Zr, In, Ba, Ce, and Bi as a central metal, and wherein the metal complex has either of a ligand represented by the following formula (5) or 8-quinolinolato as a ligand, 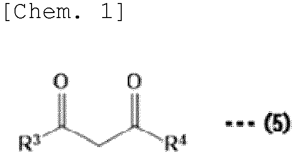 wherein in the formula (5), R³ and R⁴ each independently represent an alkyl group having 1 to 20 carbon atoms, an alkoxy group having 1 to 20 carbon atoms, an aryl group having 6 to 20 carbon atoms, an aryloxy group having 6 to 20 carbon atoms, an aralkyl group having 7 to 20 carbon atoms, or an aralkyloxy group having 7 to 20 carbon atoms.

A fourth aspect of the present invention relates to the curing catalyst according to the third aspect, wherein the ligand in the metal complex is any one of acetylacetonato, hexafluoroacetylacetonato, trifluoroacetylacetonato, 1,3-diphenyl-1,3-propanedionato, 2,2,6,6-tetramethyl-3,5-heptanedionato, 2,4-hexanedionato, 3,5-heptanedionato, 2-methylhexane-3,5-dionato, 6-methylheptane-2,4-dionato, 2,6-dimethylheptane-3,5-dionato, 2,2-dimethylhexane-3,5-dionato, methyl acetoacetate, ethyl acetoacetate, isopropyl acetoacetate, tert-butyl acetoacetate, methyl propionylacetate, ethyl propionylacetate, isopropyl propionylacetate, tert-butyl propionylacetate, methyl isobutyrylacetate, ethyl isobutyrylacetate, isopropyl isobutyrylacetate, tert-butyl isobutyrylacetate, methyl pivaloylacetate, ethyl pivaloylacetate, isopropyl pivaloylacetate, tert-butyl pivaloylacetate, or 8-quinolinolato.

A fifth aspect of the present invention relates to the curing catalyst according to any one of the first to fourth aspects, wherein the metal atom is Mo.

A sixth aspect of the present invention relates to the curing catalyst according to the first aspect, wherein the curing catalyst is molybdenum trioxide.

A seventh aspect of the present invention relates to the curing catalyst according to the first, second, fifth or sixth aspect, having a BET specific surface area of 1.0 m²/g or more.

An eighth aspect of the present invention relates to the curing catalyst according to any one of the first to seventh aspects, wherein the curing catalyst is for a powder coating material containing a compound having a β-hydroxyalkylamide group and a carboxy-group-containing resin.

A ninth aspect of the present invention relates to the curing catalyst according to any one of the first to eighth aspects, wherein the carboxy-group-containing resin is a polyester resin having a carboxy group.

A tenth aspect of the present invention relates to a resin composition containing a compound having a β-hydroxyalkylamide group, a carboxy-group-containing resin, and the curing catalyst according to any one of the first to ninth aspects.

An eleventh aspect of the present invention relates to the resin composition according to tenth aspect, containing the curing catalyst in an amount of 0.01 to 30% by weight.

A twelfth aspect of the present invention relates to the resin composition according to the tenth or eleventh aspect, wherein the carboxy-group-containing resin is a polyester resin having a carboxy group.

A thirteenth aspect of the present invention relates to a powder coating material composition containing a compound having a β-hydroxyalkylamide group, a carboxy-group-containing resin, and the curing catalyst according to any one of the first to ninth aspects.

A fourteenth aspect of the present invention relates to a method for producing the powder coating material composition according to the thirteenth aspect, wherein the method includes a premix step, a melt-kneading step, a pulverization step, and a classification step, and wherein in the premix step, the carboxy-group-containing resin, the compound having a β-hydroxyalkylamide group, and the curing catalyst are blended.

A fifteenth aspect of the present invention relates to a coating method using a powder coating material, the method including applying the powder coating material composition according to the thirteenth aspect to an object to be coated, and curing the powder coating material composition by heating.

### Effects of the Invention

The present invention can provide a curing catalyst that promotes the reaction of a hydroxyalkylamide-based curing agent with a carboxy-group-containing resin, especially a curing catalyst that promotes the curing of a powder coating material containing a hydroxyalkylamide-based curing agent and a carboxy-group-containing resin, in particular, the curing of a polyester resin-based powder coating material.

### PREFERRED MODE FOR CARRYING OUT THE INVENTION

Hereinafter, embodiments of the present invention will be described, but the present invention is not limited to the following embodiments, and the present invention can be appropriately modified so long as the object of the present invention can be achieved.

### <Resin Composition>

A resin composition according to one embodiment of the present invention contains a resin having a carboxy group (which hereinafter may be simply referred to as "carboxy-group-containing resin"), a compound having a β-hydroxyalkylamide group, and a curing catalyst containing a compound containing at least one selected from the group consisting of Mo, Cr, V, Fe, Co, Ni, Ga, Zr, In, Ba, Ce, and Bi as a metal atom. Al may be contained as a metal atom. Applications of the resin composition according to the present embodiment are not particularly limited, and the resin composition according to the present embodiment can be suitably used, among others, as a powder coating material resin composition containing a compound having a β-hydroxyalkylamide group and a resin having a carboxy group. In particular, the resin composition can be suitably used as a powder coating material resin composition containing a compound having a β-hydroxyalkylamide group and a polyester resin having a carboxy group (especially, a polyester resin having a carboxy group on its terminal).

The carboxy-group-containing resin is not particularly limited so long as the resin contains a carboxy group in the molecule, and examples thereof include a polyester resin having a carboxy group (which hereinafter may be simply referred to as "polyester resin") and a vinyl-based resin having a carboxy group (which hereinafter may be referred to as "carboxy-group-containing vinyl-based resin"), and the like, and the polyester resin having a carboxy group and the vinyl-based resin having a carboxy group may be used in combination. The carboxy-group-containing resin is preferably a polyester resin having a carboxy group, and more preferably a polyester resin having a carboxy group on its terminal from the viewpoint that when a powder coating material containing such a polyester resin is used, a coating film excellent in corrosion resistance can be formed, and the like.

The polyester resin is synthesized by polycondensation of a polyhydric carboxylic acid and glycol.

The polyhydric carboxylic acid is not particularly limited, and examples thereof include an aromatic dicarboxylic acid, a saturated aliphatic dicarboxylic acid, trihydric or higher carboxylic acid, and the like. Examples of the aromatic dicarboxylic acid include isophthalic acid, terephthalic acid, 5-sodium sulfoisophthalic acid, phthalic anhydride, biphenyldicarboxylic acid, naphthalenedicarboxylic acid, 5-tert-butyl-1,3-benzenedicarboxylic acid, and the like. Examples of the saturated aliphatic dicarboxylic acid include succinic acid, adipic acid, azelaic acid, sebacic acid, dodecanedicarboxylic acid, 1,4-cyclohexanedicarboxylic acid, and the like. Examples of the trihydric or higher carboxylic acid include trimellitic acid, trimesic acid, pyromellitic acid, and the like. Isophthalic acid or terephthalic acid is preferably contained as the polyhydric carboxylic acid. One or two more types of the polyhydric carboxylic acid can be used.

With regard to the polyhydric carboxylic acid, the proportion of the total of terephthalic acid and isophthalic acid in all the polyhydric carboxylic acid is preferably 70 mol% or more. The use of the polyhydric carboxylic acid(s) satisfying the conditions described above yields preferable durability and physical properties of the resulting coating film. The proportion of the total of terephthalic acid and isophthalic acid is more preferably 75 mol% or more, and still more preferably 80 mol% or more.

The glycol is not particularly limited, and examples thereof include an aliphatic glycol, an alicyclic glycol, an aromatic glycol, a trihydric or higher alcohol, and the like. Examples of the aliphatic glycol include neopentyl glycol, ethylene glycol, diethylene glycol, propylene glycol, 1,2-propanediol, 1,3-propanediol, 2-methyl-1,3-propanediol, 2-butyl-2-ethyl-1,3-propanediol, 1,2-butanediol, 1,3-butanediol, 1,4-butanediol, 1,2-pentanediol, 1,4-pentanediol, 2,3-pentanediol, 1,5-pentanediol, 1,4-hexanediol, 1,5-hexanediol, 1,6-hexanediol, 2,5-hexanediol, and the like. Examples of the alicyclic glycol include 1,4-cyclohexanedimethanol, 1,4-cyclohexanediol, and the like. Examples of the aromatic glycol include an ethylene oxide adduct of bisphenol A, an ethylene oxide adduct of bisphenol S, and the like. Examples of the trihydric or higher alcohol include trimethylolpropane, pentaerythritol, glycerin, and the like. Neopentyl glycol, ethylene glycol, or 1,6-hexanediol is preferably contained as the glycol. One or two or more types of the glycol can be used.

In the present embodiment, when the polyester resin is used, 500 or more, and preferably 600 or more of the terminals of the polyester resin are preferably an aliphatic dicarboxylic acid having 4 to 12 carbon atoms.

The acid value of the polyester resin is preferably 10 to 80 mgKOH/g. When the acid value of the polyester resin is less than 10 mgKOH/g, sufficient mechanical properties of the resulting coating film cannot be achieved. On the other hand, the acid value of the polyester resin exceeds 80 mgKOH/g, the resulting coating film is hard and brittle.

The molecular weight of the polyester resin is not particularly limited, and, for example, may be 5,000 to 20,000 in terms of mass average molecular weight. When the mass average molecular weight of the polyester resin falls within the above range, the physical properties of the resulting coating film can be improved.

The glass transition temperature (Tg) of the polyester resin is not particularly limited, and may be, for example, 40 to 70°C. When the glass transition temperature falls within the above range, the smoothness of the resulting coating film can be improved.

The polyester resin can be produced by any known method using the polyhydric carboxylic acid and glycol described above as raw materials. For example, the polyester resin can be produced by performing esterification or transesterification reaction at a temperature of 200 to 280°C, and then performing polycondensation reaction using a catalyst under a reduced pressure of 5 hPa or less, preferably at a temperature of 230 to 290°C.

The molecular weight of the carboxy-group-containing vinyl-based resin is not particularly limited, and is, for example, preferably in the range of 2,000 to 200,000, and more preferably in the range of 2,000 to 100,000 in terms of mass average molecular weight. When the mass average molecular weight of the carboxy-group-containing vinyl-based resin falls within the above range, the physical properties of the resulting coating film can be improved.

The glass transition temperature (Tg) of the carboxy-group-containing vinyl-based resin is not particularly limited, and is preferably in the range of 30 to 140°C, and more preferably in the range of 35 to 120°C. When the glass transition temperature (Tg) is lower than 30°C, the blocking resistance of the coating film may be impaired, and when the glass transition temperature (Tg) is higher than 140°C, the smoothness of the coating film may be impaired.

The acid value of the carboxy-group-containing vinyl-based resin is preferably 20 to 200 mgKOH/g, and more preferably 25 to 150 mgKOH/g. When the acid value is less than 20 mgKOH/g, the curability may be impaired, and when the acid value is more than 200 mgKOH/g, the corrosion resistance of the coating film may be impaired.

Examples of the carboxy-group-containing vinyl-based resin include a carboxy-group-containing vinyl-based resin which is obtained by appropriately reacting a carboxy-group-containing, radically-polymerizable unsaturated monomer and other radically-polymerizable unsaturated monomer by a known polymerization method such as a solution polymerization method, a suspension polymerization method, an emulsion polymerization method, or a bulk polymerization method, under known polymerization conditions such that the acid value, the molecular weight, and the glass transition temperature (Tg) fall within the respective ranges as described above. The solvent used in the reaction, such as water or organic solvent reaction is removed after the reaction by distillation under reduced pressure, or the like.

Examples of the carboxy-group-containing, radically-polymerizable unsaturated monomer include unsaturated acids such as acrylic acid, methacrylic acid, itaconic acid, maleic acid, and maleic anhydride, or acid anhydrides thereof.

Examples of other radically-polymerizable unsaturated monomer include: esters of acrylic acid or methacrylic acid and hydroxyalkyl having 2 to 8 carbon atoms such as 2-hydroxyethyl (meth)acrylate; vinyl aromatic compounds such as styrene, α-methylenostyrene, vinyltoluene, and α-chlorostyrene; esters of acrylic acid or methacrylic acid and alkyl or cyclic alkyl having 1 to 24 carbon atoms such as methyl (meth)acrylate, ethyl (meth)acrylate, n-butyl (meth)acrylate, i-butyl (meth)acrylate, tert-butyl (meth)acrylate, 2-ethylhexyl (meth)acrylate, n-octyl (meth)acrylate, decyl (meth)acrylate, lauryl (meth)acrylate, stearyl (meth)acrylate, cyclohexyl (meth)acrylate, isobornyl (meth)acrylate, and tricyclodecanyl (meth)acrylate; and the like.

The compound having a β-hydroxyalkylamide group has a plurality of active hydroxyl groups in the molecule, and used as a curing agent of carboxy-group-containing resin. The compound having a β-hydroxyalkylamide group is a compound that performs an esterification reaction with the carboxy group in the carboxy-group-containing resin to crosslink the carboxy-group-containing resin, and is preferably a compound having two or more substituents represented by the following general formula (1) in the molecule. The compound having a β-hydroxyalkylamide group is more preferably a compound represented by the following general formula (2).

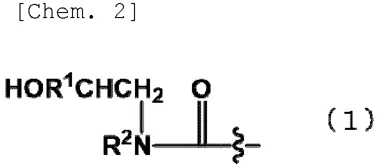

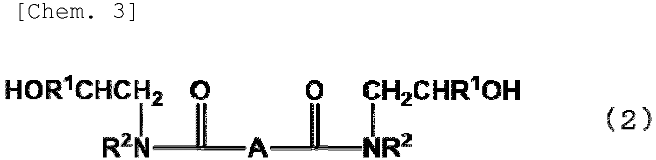

In the general formulas (1) and (2), R¹ may be identical to or different from each other, and represents a hydrogen atom, or an alkyl group having 1 to 4 carbon atoms. R² may be identical to or different from each other, and represents a hydrogen atom, an alkyl group having 1 to 5 carbon atoms or HOCH(R¹)CH₂-. In the general formula (2), A represents an alkylene group having 1 to 10 carbon atoms or a cycloalkylene group having 3 to 10 carbon atoms.

R¹ in the general formulas (1) and (2) is preferably a hydrogen atom, or a methyl group. R² is preferably HOCH(R¹)CH₂-group. A in the general formula (2) is preferably an alkylene group having 4 to 8 carbon atoms.

The compound having a β-hydroxyalkylamide group is not particularly limited, and examples thereof include N,N,N',N'-tetrakis(2-hydroxyethyl)adipamide (Primid XL-552, manufactured by EMS), N,N,N',N'-tetrakis(2-hydroxypropyl)adipamide (Primid QM1260, manufactured by EMS), and the like. One or two or more types of the compound having a β-hydroxyalkylamide group can be used.

The blend ratio of the carboxy-group-containing resin and the compound having a β-hydroxyalkylamide group is preferably 0.7 to 1.2 in terms of the molar equivalent ratio of the hydroxyl group in the β-hydroxyalkylamide group to the carboxy group in the carboxy-group-containing resin. When the molar equivalent ratio of the hydroxyl group of the β-hydroxyalkylamide group is less than 0.7, the number of crosslinking points with the carboxy-group-containing resin is small, and the coating film strength is reduced. When the molar equivalent ratio of the hydroxyl group of the β-hydroxyalkylamide group is more than 1.2, a desirable appearance of the coating film cannot be achieved.

### <Curing Catalyst>

The curing catalyst promotes esterification reaction of the carboxy group in the carboxy-group-containing resin with a β-hydroxyalkylamide group, especially the esterification reaction of the carboxy group of the polyester resin with the β-hydroxyalkylamide group, in particular, the esterification reaction of the terminal carboxy group of the polyester resin with the β-hydroxyalkylamide group. The curing catalyst contains a compound including at least one selected from the group consisting of Mo, Cr, V, Fe, Co, Ni, Ga, Zr, In, Ba, Ce, and Bi as a metal atom. The curing catalyst preferably contains a compound containing, as the metal atom, at least one of Mo and Cr among the above-listed metal atoms. The curing catalyst most preferably contains a compound containing Mo as the metal atom. The curing catalyst may contain a compound containing Al as the metal atom.

In the case where esterification reaction of the carboxy group in the carboxy-group-containing resin with a β-hydroxyalkylamide group proceeds according to the reaction mechanism represented by the following reaction formula (3), it may be assumed that even a conventional esterification-reaction-promoting catalyst is effective for promoting the esterification reaction of the carboxy group in the carboxy-group-containing resin with the β-hydroxyalkylamide group. However, according to the studies conducted by the present inventors, the conventional esterification-reaction-promoting catalyst was ineffective for promoting the esterification reaction of the carboxy group in the carboxy-group-containing resin with a β-hydroxyalkylamide group, and on the contrary, retarded the esterification reaction in some cases (see, Comparative Examples described below). The esterification reaction of the carboxy group in the carboxy-group-containing resin with a β-hydroxyalkylamide group is presumed to proceed via the cyclization reaction of the β-hydroxyalkylamide group, as shown in the following formula (4), not via the reaction mechanism illustrated in the reaction formula (3).

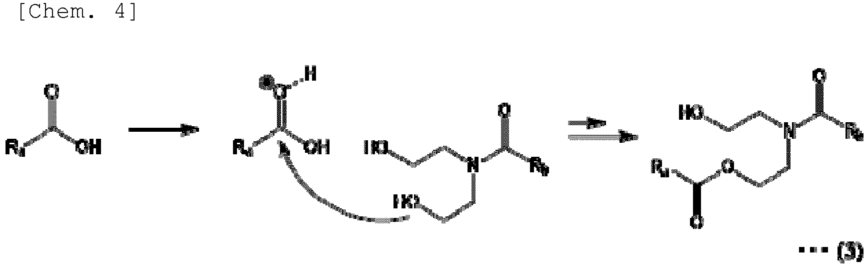

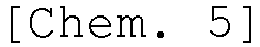

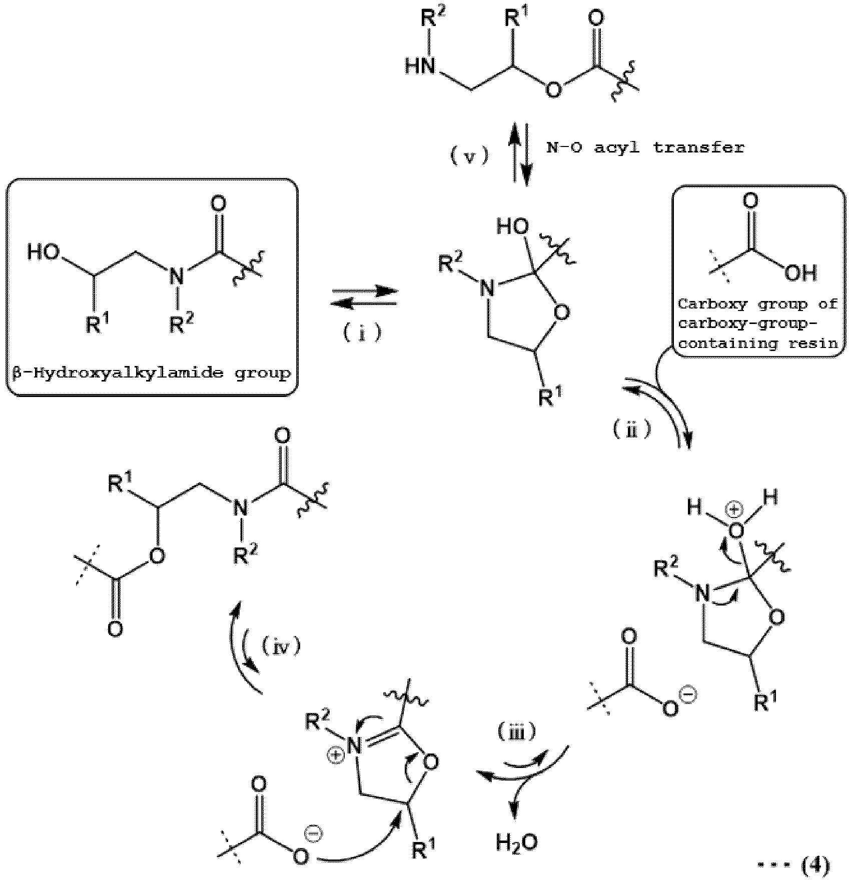

In (i) in the formula (4), the hydroxyl group in the β-hydroxyalkylamide group nucleophilically adds to the carbon atom of the carbonyl group, whereby the cyclization reaction occurs to intramolecularly form the 5-membered ring. In (ii) in the formula (4), the deprotonation reaction of the terminal carboxy group of the carboxy-group-containing resin by the β-hydroxyalkylamide group cyclized to the 5-membered ring takes place, to form a carboxylate anion. At this time, N-0 acyl transfer takes place as a side reaction, as shown by (v). In (iii) in the formula (4), the carboxylate anion thus formed adds to the β-position of the β-hydroxyalkylamide group cyclized to the 5-membered ring, followed by the elimination of water (H₂O). In (iv) in the formula (4), the ring-opening reaction takes place, and the esterification reaction is completed. The reactions (i) to (v) described above are equilibrium reactions, and the reactions (ii) and (v) are competitive reactions. It should be noted that R¹ and R² in the formula (4) are the same as R¹ and R² in the general formulas (1) and (2).

The present inventors have assumed that the conventional esterification-reaction-promoting catalyst promotes the side reactions shown by (v) in the formula (4), and inhibits the esterification reaction of the carboxy-group-containing resin with the β-hydroxyalkylamide. Thus, the present inventors have envisaged a curing catalyst according to the present embodiment, which is considered to promote the cyclization reaction of the β-hydroxyalkylamide.

The curing catalyst preferably contains a metal complex having the metal atom described above as a central metal. Examples of the ligand of the metal complex include a ligand represented by the following formula (5) and 8-quinolinolato, and the like.

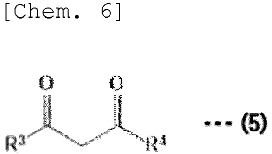

In the formula (5), R³ and R⁴ each independently represent an alkyl group having 1 to 20 carbon atoms, an alkoxy group having 1 to 20 carbon atoms, an aryl group having 6 to 20 carbon atoms, an aryloxy group having 6 to 20 carbon atoms, an aralkyl group having 7 to 20 carbon atoms, or an aralkyloxy group having 7 to 20 carbon atoms. R³ and R⁴ are preferably an alkyl group having 1 to 12 carbon atoms, an alkoxy group having 1 to 12 carbon atoms, an aryl group having 6 to 12 carbon atoms, an aryloxy group having 6 to 12 carbon atoms, an aralkyl group having 7 to 12 carbon atoms or an aralkyloxy group having 7 to 12 carbon atoms, and more preferably an alkyl group having 1 to 6 carbon atoms, an alkoxy group having 1 to 6 carbon atoms, an aryl group having 6 to 12 carbon atoms, an aryloxy group having 6 to 12 carbon atoms, an aralkyl group having 7 to 12 carbon atoms or an aralkyloxy group having 7 to 12 carbon atoms.

Examples of the alkyl group having 1 to 20 carbon atoms include an unsubstituted (substituent-free) linear or branched alkyl group having 1 to 20 carbon atoms such as a methyl group, an ethyl group, an n-propyl group, an isopropyl group, an n-butyl group, an isobutyl group, tert-butyl group, an n-pentyl group, an isopentyl group, a neopentyl group, an n-hexyl group, an n-heptyl group, an n-octyl group, an n-nonyl group, and an n-decyl group, and preferably a methyl group, an ethyl group, an n-propyl group, an isopropyl group, an n-butyl group, an isobutyl group, a tert-butyl group, an n-pentyl group, an isopentyl group, a neopentyl group, and an n-hexyl group. Examples of the alkoxy group having 1 to 20 carbon atoms include unsubstituted, linear or branched alkoxy group having 1 to 20 carbon atoms such as a methoxy group, an ethoxy group, an n-propoxy group, an isopropoxy group, an n-butoxy group, an isobutoxy group, a tert-butoxy group, an n-pentyloxy group, an isopentyloxy group, a neopentyloxy group, an n-hexyloxy group, an n-heptyloxy group, an n-octyloxy group, an n-nonyloxy group, and an n-decyloxy group, and preferably a methoxy group, an ethoxy group, an n-propoxy group, an isopropoxy group, an n-butoxy group, an isobutoxy group, a tert-butoxy group, an n-pentyloxy group, an isopentyloxy group, a neopentyloxy group, and an n-hexyloxy group. Examples of the aryl group having 6 to 20 carbon atoms include a phenyl group, a toluyl group, a xylyl group, a naphthyl group, an anthryl group, a phenanthryl group, and a phenylphenyl group, and the like, and preferably a phenyl group, a toluyl group, a xylyl group, and a naphthyl group. Examples of the aryloxy group having 6 to 20 carbon atoms include a phenyloxy group, a 2-naphthyloxy group, and the like. Examples of the aralkyl group having 7 to 20 carbon atoms include a benzyl group, a phenylethyl group, a methylphenylethyl group, and the like. Examples of the aralkyloxy group having 7 to 20 carbon atoms include a benzyloxy, a phenethyloxy group, and the like.

Specifically, the ligand of the metal complex is preferably at least one of acetylacetonato (2,4-pentanedionato, acac), hexafluoroacetylacetonato, trifluoroacetylacetonato, 1,3-diphenyl-1,3-propanedionato (dbm), 2,2,6,6-tetramethyl-3,5-heptanedionato (tmhd), 2,4-hexanedionato, 3,5-heptanedionato, 2-methylhexane-3,5-dionato, 6-methylheptane-2,4-dionato, 2,6-dimethylheptane-3,5-dionato, 2,2-dimethylhexane-3,5-dionato, methyl acetoacetate, ethyl acetoacetate, isopropyl acetoacetate, tert-butyl acetoacetate, methyl propionylacetate, ethyl propionylacetate, isopropyl propionylacetate, tert-butyl propionylacetate, methyl isobutyrylacetate, ethyl isobutyrylacetate, isopropyl isobutyrylacetate, tert-butyl isobutyrylacetate, methyl pivaloylacetate, ethyl pivaloylacetate, isopropyl pivaloylacetate, tert-butyl pivaloylacetate, and 8-quinolinolato. Among these, at least one of acetylacetonato (acac), 1,3-diphenyl-1,3-propanedionato (dbm) and 2,2,6,6-tetramethyl-3,5-heptanedionato (tmhd) is more preferably contained. Although the reason for the exertion of favorable curing-promotion effects by the metal complex having the ligand described above is unclear, it is presumed, for example, as follows: when the metal complex has the ligand, the dispersibility of the metal complex into the powder coating material is improved, and this improvement in the dispersibility contributes to the aforementioned curing-promotion effects.

The curing catalyst may contain a compound other than the metal complex containing the metal atom. Examples of such a compound include a metal oxide, a metal sulfide, a chloride, a lithium salt, a sodium salt, a potassium salt, an ammonium salt, a phosphate salt, a silicate salt, an acetate salt, hydrates thereof, and the like. Examples of the metal oxide include molybdenum trioxide (MoO₃), molybdic acid, molybdenum dioxide (MoO₂), a molybdenum oxy-alkoxide compound represented by Mo₂O₅(OR^{X})₂•2R^{Y}OH, wherein R^{X} represents an alkyl group having 1 to 6 carbon atoms, and R^{Y} represents an alkyl group having 1 to 6 carbon atoms, such as molybdenum oxy-methoxide (Mo₂O₅(OCH₃)₂•2CH₃OH), molybdenum oxy-ethoxide (Mo₂O₅(OC₂H₅)₂•2C₂H₅OH), molybdenum oxy-isopropoxide (Mo₂O₅(OCH(CH₃)₂)₂•2(CH₃)₂CHOH), molybdenum oxy-butoxide (Mo₂O₅(OC₄H₉)₂•2(C₄H₉OH), and the like. Examples of the metal sulfide include molybdenum disulfide (MoS₂), molybdenum trisulfide (MoS₃), and the like. Examples of the chloride include molybdenum dichloride dioxide, and the like. Examples of the lithium salt include lithium molybdate (Li₂MoO₄), and the like. Examples of the sodium salt include sodium molybdate (Na₂MoO₄), and the like. Examples of the potassium salt include potassium molybdate (K₂MoO₄), and the like. Examples of the ammonium salt include ammonium heptamolybdate ((NH₄)₆(Mo₇O₂₄)), and ammonium molybdate ((NH₄)₂MoO₄). Examples of the phosphate salt include 12-molybdo(VI)phosphoric acid (12MoO₃•H₃PO₄), ammonium 12-molybdo(VI)phosphate ((NH₄)₃PO₄•12MoO₃), sodium 12-molybdo(VI)phosphate (Na₃PO₄•12MoO₃), and the like. Examples of the silicate salt include 12-molybdo(VI)silicic acid (Si(OH)₄•12MoO₃), and the like. Examples of the acetate salt include molybdenum(II) acetate dimer ({Mo(OAc)₂}₂), molybdenum(VI) dioxide diacetate (MoO₂(OAc)₂), and the like.

The metal oxide as the curing catalyst has a BET specific surface area of preferably 1.0 m²/g or more, and more preferably 13 m²/g or more. When the curing catalyst has a BET specific surface area falling within the above-specified range, the number of reaction sites of the catalyst can be increased, and thereby the activity of the catalyst can be increased.

The content of the curing catalyst in the resin composition, especially, in the powder coating material composition is preferably 0.01 to 30% by weight. When the content of the curing catalyst is less than 0.01% by weight, favorable curability is unlikely to be achieved. When the content of the curing catalyst is increased to more than 300 by weight, further enhancement of the effects is unlikely to be achieved. The content of the curing catalyst is more preferably 0.1 to 10% by weight.

The resin composition according to the present embodiment, especially, the powder coating material composition may contain known components other than the components described above, so long as the effects of the present invention are not impaired. For example, the resin composition may contain additives such as a nonreactive resin, a thermosetting resin, a photocurable resin, a curing agent to be used in combination with a compound having a β-hydroxyalkylamide group, a photoinitiator, a sensitizer, a levelling agent, a light stabilizer, an antioxidant, pigment, filler, an adhesive agent, a pinhole inhibitor, and the like.

In the case where the resin composition according to the present embodiment is a powder coating material composition, the mean particle size of the powder coating material composition is not particularly limited, and for example, a suitable mean particle size may be selected depending on a coating method using the powder coating material composition as described later. For example, the powder coating material composition is applied according to electrostatic coating, the particle size of the powder coating material composition may be 15 to 50 um. For example, when the powder coating material composition is applied according to fluidized bed coating, the particle size of the powder coating material composition may be 50 to 200 um. As used herein, the particle size of the powder coating material composition means the volume-average particle size (D50), unless otherwise specified particularly. The measurement of the volume-average particle size can be performed by any known method such as laser diffraction, etc.

### <Production Method of Resin Composition>

Examples of the production method of the resin composition according to the present embodiment include a method that involves adding and blending the compound having a β-hydroxyalkylamide group, and the curing catalyst according to the embodiment of the present invention to the carboxy-group-containing resin, a method that involves adding the curing catalyst according to the embodiment of the present invention to a resin composition containing the compound having a β-hydroxyalkylamide group and the carboxy-group-containing resin, and the like, and the blending order of the components and the blending method are not particularly limited.

### <Curing Method of Resin Composition>

The conditions for curing the resin composition according to the present embodiment by heating depend on the functional groups responsible for the curing (the carboxy group in the carboxy-group-containing resin and the β-hydroxyalkylamide group of the compound having a β-hydroxyalkylamide group) and the amount of the curing catalyst, and the like; for example, the heating temperature is preferably 180°C or lower, and more preferably 150 to 170°C. Since the resin composition according to the present embodiment contains the curing catalyst, favorable curability can be exhibited even at the aforementioned temperatures of curing by heating specified above, i.e., at lower temperatures than conventional resin compositions.

### <Production Method of Powder Coating Material Composition>

Examples of the method for producing a powder coating material composition according to the present embodiment include a method that involves adding and blending the curing catalyst according to the embodiment of the present invention to a commercially available powder coating material composition, or a method which involves a premix step, a melt-kneading step, a pulverization step, and a classification step, as described later. The method for adding and blending the curing catalyst according to the present embodiment to the commercially available powder coating material composition is not particularly limited, and includes, for example, a method that involves uniformly spraying the curing catalyst according to the present embodiment onto the surface of the particles of the commercially available powder coating material composition, for example, by spray coating, etc. Alternatively, the powder coating material may be obtained by pulverizing and classifying the resin composition described above.

A method for producing a powder coating material composition which involves a premix step, a melt-kneading step, a pulverization step, and a classification step will be described.

In the premix step, the carboxy-group-containing resin, the compound having a β-hydroxyalkylamide group, the curing catalyst, and additive(s) as needed, etc. are mixed in a dry mode using a mixer having a high-speed rotary blade such as a Henschel mixer, and a super mixer. In addition to this, the mixing may be performed using a Nauta mixer having a low-speed rotary blade, etc. The addition of the curing catalyst in the premix step allows for uniform dispersion of the curing catalyst in the powder coating material composition, leading to favorable curing-promotion effects.

In the melt-kneading step, the mixture obtained after the dry mixing is melt-kneaded using various types of extruders. Various types of extruders such as a single-screw extruder, a twin-screw extruder, a planetary gear extruder may be used. The components are kneaded in a molten state, and consequently homogenized. The conditions for the melt-kneading are not particularly limited, and the melt-kneading may be performed, for example, under a temperature condition of 70 to 140°C. The mixture obtained after the melt-kneading is preferably cooled and solidified on a cooling roll, a cooling conveyer, or the like and then pelletized.

In the pulverization step, the mixture homogenized and formed into pellets in the melt-kneading step is pulverized. The pulverization of the pellets can be performed using a pulverizer such as a pin mill, a hammer mill, and a jet mill.

In the classification step, the mixture pulverized in the pulverization step is classified to particles having a specific particle size using a vibrating sieve, an ultrasound sieve, a cyclone classifier, or the like. A plurality of the classifier may be used in combination. In the classification step, either or both of, for example, particles having a diameter of less than 10 um and particles having a diameter of more than 100 µm are at least removed. Thus, the powder coating material composition according to the present embodiment is obtained.

### <Coating Method Using Powder Coating Material Composition>

A coating method using the powder coating material composition according to the present embodiment is performed by applying the powder coating material composition to one side or both sides of an object to be coated, drying the powder coating material composition, as needed, and curing the powder coating material composition by heating.

The application method of the powder coating material composition is not particularly limited, and electrostatic coating, electrostatic spraying, spraying, fluidized bed coating, blasting, spray coating, thermal spraying, plasma spraying, and the like may be employed.

The conditions for curing the powder coating material composition by heating depend on the functional groups responsible for the curing (the carboxy group in the carboxy-group-containing resin and the β-hydroxyalkylamide group of the compound having a β-hydroxyalkylamide group) and the amount of the curing catalyst, and the thickness of the coating film, and for example, the heating temperature is preferably 180°C or lower, and more preferably 150 to 170°C. Since the powder coating material composition according to the present embodiment contains the curing catalyst, favorable curability can be exhibited even at the aforementioned temperatures of curing by heating specified above, i.e., at lower temperatures than conventional powder coating material compositions.

Examples of the object to be coated of the powder coating material composition according to the present embodiment include, but not particularly limited to, inorganic substrates such as glass and ceramic, resin materials such as polycarbonates, polyesters, urethanes, acryls, polyacetate cellulose, polyamides, polyimides, polystyrene, epoxy resins, polyolefins, polycycloolefins, and polyvinyl alcohol, various metal sheets such as iron sheet, steel sheet, aluminum sheet, and stainless-steel sheet, and the like. Since the powder coating material composition according to the present embodiment exhibits favorable curability, a favorable coating film can be obtained, for example, even when the object to be coated is a thick metal sheet.

The powder coating material composition according to the present embodiment may be applied directly on the object to be coated, or the object to be coated may be surface-treated by any known method before the application of the powder coating material composition. Alternatively, the powder coating material composition according to the present embodiment may be applied on a coating film formed on the object using a known undercoating material such as an electrodeposition coating material or a primer.

The powder coating material composition according to the present embodiment can form a coating film having a thickness of, for example, 5 to 1000 um. The thickness of the coating film may be 20 to 150 µm from the viewpoint of preventing the transparency of the coating film and the generation of air bubbles. In applications where weatherability is strictly demanded, the thickness of the coating film may be 100 to 200 µm.

### EXAMPLES

Hereinafter, the present invention will be described in detail with reference to Examples. However, the present invention is not limited to the following Examples.

In the Examples, ¹H-NMR analyses, and IR analyses were performed under the following conditions.

### • ¹H-NMR Analysis

¹H-NMR analyses were performed at 400 MHz using a nuclear magnetic resonance apparatus AV400 manufactured by Bruker Corporation and DMSO-d6 as a solvent.

### • IR Analysis

IR analyses were performed according to the ATR method using FT/IR-6600 manufactured by JASCO Corporation Co. Ltd.

The suppliers of the reagents used in the Synthesis Examples described below are as follows: dibenzoylmethane (Tokyo Chemical Industry Co., Ltd.); acetylacetone (Tokyo Chemical Industry Co., Ltd.); acetic acid (Junsei Chemical Co., Ltd.); acetic anhydride (FUJIFILM Wako Pure Chemical Corporation); 8-quinolinol (Tokyo Chemical Industry Co., Ltd.); nitric acid (FUJIFILM Wako Pure Chemical Corporation); and sodium molybdate dihydrate (FUJIFILM Wako Pure Chemical Corporation).

### [Example 1-1]

A commercially available powder coating material, PE 780 line gray (manufactured by Kuboko Paint Co., Ltd.) was used as a powder coating material containing a polyester resin and a compound having a β-hydroxyalkylamide group. To 150 mg of the powder coating material was added 1.5 mg (1.0% by weight) of bis(acetylacetonato)dioxomolybdenum(VI) (MoO₂(acac)₂) as a curing catalyst, to prepare a sample for evaluation of the powder coating material composition of Example 1-1.

### [Example 1-2 to Example 1-25, Example 2-1 to Example 2-8, Comparative Examples 1-1 to 1-6, and Comparative Example 2-1 to Comparative Example 2-3]

In each of Examples and Comparative Examples, a sample for evaluation was prepared under the same conditions as in Example 1-1 except that the compound specified in Table 1 below was used as a catalyst in an amount specified in Table 1. In Comparative Example 1-1, no catalyst was added. In Table 1, "acac" represents acetylacetonato (2,4-pentanedionato), "tmhd" represents 2,2,6,6-tetramethyl-3,5-heptanedionato, and "dbm" represents 1,3-diphenyl-1,3-propanedionato.

In each of Examples 2-1 to 2-8 and Comparative Examples 2-1 to 2-3, a sample for evaluation was prepared under the same conditions as in Example 1-1 except that the compound specified in Table 1 below was used as a catalyst in an amount specified in Table 1. Synthesis examples of the respective catalysts are described below.

### Synthesis Example 1 (Example 2-1): Synthesis of MoO₂(dbm)₂

MoO₂(acac)₂ (154 mg, 472 µmol) and dibenzoylmethane (211 mg, 944 µmol) were sequentially added to a test tube, and the mixture was reacted under reduced pressure (1 Torr) at 70°C for 5 hours. After the reaction, the resulting reaction mixture was cooled to room temperature, to give MoO₂(dbm)₂ as lemon yellow crystals (268 mg, 467 µmol, 99% yield).
¹H-NMR (400 MHz, DMSO-d6) analysis result: δ = 7.46 (m, 4H), 7.54-7.73 (m, 10H), 8.05 (d, J = 7.6 Hz, 4H), 8.23 (d, J = 7.6 Hz, 4H)

### Synthesis Example 2 (Example 2-2): Synthesis of Mo₂O₃(acac)₄

MoO₂(acac)₂ (1.00 g, 3.07 mmol) and acetylacetone (10.00 g, 99.9 mmol) were sequentially added to a 30 mL SUS autoclave, then nitrogen substitution was performed, and the reaction mixture was reacted at 160°C for 24 hours. The resulting reaction mixture was cooled to room temperature, to give a blackish red suspension. The red suspension was filtered, and the solid was washed (acetylacetone, 1 mL), to give reddish brown crystals. The reddish brown crystals were dried in vacuo to give Mo₂O₂(acac)₄ (309 mg, 486 µmol, 32% yield). IR analysis result (cm⁻¹) : ν^{~} = 1580, 1560, 1510, 1422, 1355, 1272, 1188, 1027, 958, 949, 930, 806, 778

### Synthesis Example 3 (Example 2-3): Synthesis of Mo₂O₅(OMe)₂•2MeOH

MoO₃•2H₂O (100 mg, 555 µmol) and methanol (1.5 mL) were sequentially added to a test tube, then nitrogen substitution was performed, and the reaction mixture was reacted at room temperature for 3 hours, to give a white suspension. The white suspension was filtered, and the solid was washed (methanol, 1 mL), to give white crystals. The white crystals were dried in vacuo to give a mixture composed of molybdenum oxide containing Mo₂O₅(OMe)₂•2MeOH and methanol (91 mg). IR analysis result (cm⁻¹) : ν^{~} = 3281, 2936, 2829, 1629, 1430, 1390, 1103, 978, 947, 794, 745

### Synthesis Example 4 (Example 2-4): Synthesis of Mo₂O₅(Oi-Pr)₂•2i-PrOH

MoO₃•2H₂O (100 mg, 555 µmol) and isopropanol (1.5 mL) were sequentially added to a test tube, then nitrogen substitution was performed, and the reaction mixture was reacted at room temperature for 20 hours, to give a yellow suspension. The yellow suspension was filtered, and the solid was washed (isopropanol, 1 mL), to give yellow crystals. The yellow crystals were dried in vacuo to give a mixture composed of molybdenum oxide containing Mo₂O₅(i-Pr)₂•2i-PrOH and isopropanol (112 mg). IR analysis result (cm⁻¹): ν^{~} = 3381, 1613, 968, 930, 899, 726

### Synthesis Example 5 (Example 2-5): Synthesis of Mo₂O₅(On-Bu)₂•2n-BuOH

MoO₃•2H₂O (100 mg, 555 µmol) and n-butanol (1.5 mL) were sequentially added to a test tube, then nitrogen substitution was performed, and the reaction mixture was reacted at room temperature for 20 hours, to give a pale green suspension. The pale green suspension was filtered, and the solid was washed (n-butanol, 1 mL), to give pale green crystals. The pale green crystals were dried in vacuo to give a mixture composed of molybdenum oxide containing Mo₂O₅(On-Bu)₂•2n-BuOH and butanol (118 mg). IR analysis result (cm-¹): ν^{~} = 3500, 3368, 3090, 1621, 962, 898, 723

### Synthesis Example 6 (Example 2-6): Synthesis of MoO₂(OAc)₂

MoO₃•2H₂O (200 mg, 1.11 mmol), acetic acid (1.00 g, 16.6 mmol), and acetic anhydride (1.00 g, 9.80 mmol) were sequentially added to a test tube under light shading with an aluminum foil, then nitrogen substitution was performed, and the reaction mixture was reacted at room temperature for 30 hours, to give a white suspension. The white suspension was filtered, and the crystals were dried in vacuo to give MoO₂(OAc)₂ as white crystals (275 mg, 1.11 mmol, 100% yield). ¹H-NMR (400 MHz, DMSO-d6) analysis result: δ = 1.94 (s, 6H)

### Synthesis Example 7 (Example 2-7): Synthesis of MoO₂(8-quinolinolate)₂

MoO₂(acac)₂ (0.500 g, 1.53 mmol) and methanol (5.6 mL) were sequentially added to a 200 mL three-necked flask, and then nitrogen substitution was performed. A solution prepared by diluting 8-quinolinol (0.445 g, 3.07 mmol) with methanol (11.2 mL) was added dropwise at room temperature to the reaction solution, and then the mixture was reacted at room temperature for 22 hours to give a yellow suspension. The yellow suspension was filtered, and the solid was washed (methanol, 3 mL), to give yellow crystals. The yellow crystals were dried in vacuo to give MoO₂(8-quinolinolate)₂ (614 mg, 1.48 mmol, 960 yield).
¹H-NMR (400 MHz, DMSO-d6) analysis result: δ = 7.42 (dd, J = 1.2, 7.5 Hz, 2H), 7.53 (dd, J = 1.2, 8.4 Hz, 2H), 7.55 (dd, J = 5.4, 7.8 Hz, 2H), 7.69 (dd, J = 7.5, 8.4 Hz, 2H), 8.52 (d, J = 7.8 Hz, 2H), 8.53 (d, J = 5.4 Hz, 2H)

### Synthesis Example 8 (Example 2-8): Synthesis of MoO₃•2H₂O

To a 200 mL three-necked flask was added 5 N nitric acid (60 mL, 300 mmol), and then nitrogen substitution was performed. A solution prepared by diluting sodium molybdate dihydrate (10.00 g, 41.33 mmol) with ion exchanged water (20 mL) was added dropwise to the reaction solution at room temperature. The reaction solution was reacted at room temperature for 17 days to give a lemon colored suspension. The suspension was filtered, and then the solid was washed sequentially with 4 N nitric acid (20 mL) and ion exchanged water (20 mL), to give lemon colored crystals. The lemon colored crystals were air-dried to give MoO₃•2H₂O (5.23 g, 29.1 mmol, 70% yield) . IR analysis result (cm⁻¹) : ν^{~} = 3520, 3406, 3223, 1623, 968, 905, 744

Examples 1-17, 1-18, 1-19 and 1-20 were carried out using molybdenum trioxide (MoO₃) having a BET specific surface area specified in Table 1 as a catalyst. The compounds used in the Examples are as follows. MoO₃ in Example 1-17 (manufacturer: Junsei Chemical Co., Ltd.), MoO₃ in Example 1-18 (average particle size: 13-80 nm; manufacturer: EMJapan Co., Ltd.), MoO₃ in Examples 1-19 to 1-20 (average particle size: 100 nm; manufacturer: Sigma-Aldrich), MoO₂(acac)₂ (Tokyo Chemical Industry Co., Ltd.), MoO₂(tmhd)₂ (STREM Chemicals), Al(acac)₃ (Tokyo Chemical Industry Co., Ltd.), VO(acac)₂ (Tokyo Chemical Industry Co., Ltd.), Cr(acac)₃ (Tokyo Chemical Industry Co., Ltd.), Fe(acac)₃ (Nihon Kagaku Sangyo Co., Ltd.), Co(acac)₃ (Nihon Kagaku Sangyo Co., Ltd.), Ni(acac)₂ (Sigma-Aldrich), Ga(acac)₃ (Tokyo Chemical Industry Co., Ltd.), Zr(acac)₄ (Tokyo Chemical Industry Co., Ltd.), Ce(acac)₃•H₂O (Sigma-Aldrich), In(acac)₃ (FUJIFILM Wako Pure Chemical Corporation), Ba(acac)₂•8H₂O (Sigma-Aldrich), Bi(tmhd)₃ (STREM Chemicals), molybdic acid (85%) (Sigma-Aldrich), molybdenum(II) acetate dimer (Sigma-Aldrich), sodium molybdate dihydrate (FUJIFILM Wako Pure Chemical Corporation), ammonium heptamolybdate tetrahydrate (FUJIFILM Wako Pure Chemical Corporation), 12 molybdo(VI)phosphoric acid hydrate (FUJIFILM Wako Pure Chemical Corporation), TiO(acac)₂ (Tokyo Chemical Industry Co., Ltd.), Mn(acac)₂•2H₂O (Tokyo Chemical Industry Co., Ltd.), Mn(acac)₃ (Tokyo Chemical Industry Co., Ltd.), Cu(tmhd)₂ (Sigma-Aldrich), Zn(acac)₂ (Tokyo Chemical Industry Co., Ltd.). Further, F₅PhNH₃(OTf) in Comparative Example 2-1 is a compound (pentafluoroanilinium triflate) having the structure represented by the following formula (6), and was used as a product from Tokyo Chemical Industry Co., Ltd.

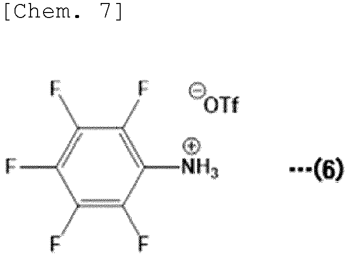

Ph₂NH₂(OTf) in Comparative Example 2-2 is a compound (diphenylammonium trifluoromethanesulfonate) having the structure represented by the following formula (7) structure, and was used as a product from Tokyo Chemical Industry Co., Ltd.

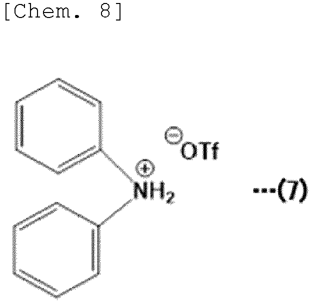

ZnTAC24 in Comparative Example 2-3 is a compound (oxo[hexa (trifluoroacetato)]tetrazinc trifluoroacetic acid adduct) having the structure represented by the following formula (8), and was used as a product from STREM Chemicals.

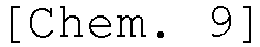

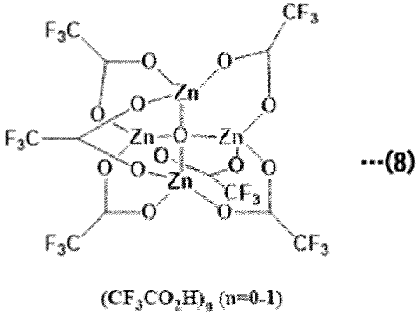

The BET specific surface area of molybdenum trioxides used in Examples 1-17, 1-18, 1-19 and 1-20 was measured as follows. As a pretreatment, molybdenum trioxide was placed in a pretreatment apparatus for adsorption measurement (apparatus name: BELPREP-vacII manufactured by MicrotracBEL Corp.), and vacuum heating and degassing were performed at 120°C for 8 hours. Then, the nitrogen adsorption amount of the pretreated molybdenum trioxide was measured according to the volumetric gas adsorption method at the liquid nitrogen temperature (77 K) using a nitrogen adsorption measuring apparatus (apparatus name: BELSORP-miniII manufactured by MicrotracBEL Corp.). An adsorption measurement program installed in BELSORP-miniII was used as the measurement program for this study. The specific surface area was calculated from the measured nitrogen adsorption amount according to the BET method using the analysis program installed in BELSORP-miniII. The measurement conditions are as follows. Adsorption temperature: 77 K
Adsorbate: nitrogen
Saturated vapor pressure: measured
Adsorbate cross-sectional area: 0.162 nm²
Equilibrium waiting time: 500 sec
The term "equilibrium waiting time" means a waiting time after reaching the adsorption equilibrium state (a state in which the pressure change at the time of adsorption and desorption is equal to or lower than a predetermined value).

### <Evaluation of Curing Time of Powder Coating Material Composition>

Samples for evaluation of the powder coating material compositions of Examples 1-1 to 1-25, Examples 2-1 to 2-8, Comparative Examples 1-1 to 1-6, and Comparative Examples 2-1 to Comparative Example 2-3 were used to evaluate the curing time of the powder coating material compositions. An automated curing time measuring apparatus MADOKA (manufactured by Cyber. Co. Ltd.) was used as a measuring apparatus, and the measurements were performed under the following conditions. Incidentally, when a curing catalyst is added to the powder coating material later, the curing promotion property of the catalyst cannot be accurately measured under ordinary conditions due to poor dispersibility of the catalyst. However, when the measuring apparatus is used, the catalyst can be uniformly dispersed into the powder coating material with heating, and thus, the curing promotion property of the catalyst can be favorably evaluated. Hot plate temperature: 160°C
Torque determination value: 1200 (torque 1000 = 4.31 mN•m)
Stirring speed (rotation): 100 rpm
Stirring speed (revolution): 25 rpm
Gap value (gap between hot plate and stirring blade): 0.3 mm
Hot plate elevation waiting time: 10 sec
The time required from the start of the measurement to the attainment of the torque determination value of 120% was defined as the curing time. With respect to the Examples measured under different conditions such as different air temperatures, the data was acquired under the same conditions in the absence of the catalyst similarly to Comparative Example 1-1, and used as a reference value shown in Table 1. The relative values of the curing time with respect to the reference value are listed in Table 1 as the relative curing time value. A relative curing time value of less than 1 was evaluated as indicating the promotion of the curing of powder coating material composition by the curing catalyst. The results are shown in Table 1.

**[Table 1]**

| | Catalyst | | Time for torque 1200 (sec) | Reference value (sec) | Relative values of curing |
|---|---|---|---|---|---|
| | Compound | Weight (1) | | | |
| Example 1-1 | MoO₂(acac)₂ | 1.0 | 320 | 410 | 0.780 |
| Example 1-2 | MoO₂(acac)₂ | 0.5 | 347 | 410 | 0.846 |
| Example 1-3 | MoO₂(acac)₂ | 0.2 | 388 | 410 | 0.946 |
| Example 1-4 | MoO₂(tmhd)₂ | 1.0 | 316 | 410 | 0.771 |
| Example 2-1 | MoO₂(dbm)₂ | 1.0 | 382 | 421 | 0.907 |
| Example 2-2 | Mo₂O₃(acac)₄ | 1.0 | 391 | 452 | 0.865 |
| Example 2-3 | Mo₂O₅(OMe)₂·2MeOH | 1.0 | 361 | 435 | 0.830 |
| Example 2-4 | Mo₂O₅(Oi-Pr)₂·2i-PrOH | 1.0 | 370 | 435 | 0.851 |
| Example 2-5 | Mo₂O₅(OBu)₂·2BuOH | 1.0 | 390 | 435 | 0.897 |
| Example 2-6 | MoO₂(OAc)₂ | 1.0 | 378 | 426 | 0.887 |
| Example 2-7 | MoO₂(8-quinolinolate)₂ | 1.0 | 409 | 421 | 0.971 |
| Example 2-8 | MoO₃•2H₂O | 1.0 | 354 | 403 | 0.878 |
| Example 1-5 | Al(acac)₃ | 1.0 | 389 | 410 | 0.949 |
| Example 1-6 | VO(acac)₂ | 1.0 | 404 | 410 | 0.985 |
| Example 1-7 | Cr(acac)₃ | 1.0 | 375 | 410 | 0.915 |
| Example 1-8 | Fe(acac)₃ | 1.0 | 406 | 410 | 0.990 |
| Example 1-9 | Co(acac)₃ | 1.0 | 407 | 410 | 0.993 |
| Example 1-10 | Ni(acac)₂ | 1.0 | 409 | 410 | 0.998 |
| Example 1-11 | Ga(acac)₃ | 1.0 | 409 | 410 | 0.998 |
| Example 1-12 | Zr(acac)₄ | 1.0 | 400 | 410 | 0.976 |
| Example 1-13 | Ce(acac)₃·H₂O | 1.0 | 409 | 410 | 0.998 |
| Example 1-14 | In(acac)₃ | 1.0 | 392 | 410 | 0.956 |
| Example 1-15 | Ba(acac)₂·8H₂O | 1.0 | 398 | 410 | 0.971 |
| Example 1-16 | Bi(tmhd)₃ | 1.0 | 404 | 410 | 0.985 |
| Example 1-17 | MoO₃ (Specific surface area: 1.26 m²/g) | 1.0 | 399 | 410 | 0.973 |
| Example 1-18 | MoO₃ (13-80nm) (Specific surface area: 13.3 m²/g) | 1.0 | 327 | 410 | 0.798 |
| Example 1-19 | MoO₃ (100nm) (Specific surface area: 2.56 m²/g) | 1.0 | 405 | 410 | 0.988 |
| Example 1-20 | MoO₃ (100nm) (Specific surface area: 2.56 m²/g) | 25 | 323 | 410 | 0.788 |
| Example 1-21 | Molybdic acid (85%) | 1.0 | 390 | 410 | 0.951 |
| Example 1-22 | Molybdenum(II) acetate dimer | 1.0 | 390 | 410 | 0.951 |
| Example 1-23 | Sodium molybdate dihydrate | 1.0 | 394 | 410 | 0.961 |
| Example 1-24 | Ammonium heptamolybdate tetrahydrate | 1.0 | 373 | 410 | 0.910 |
| Example 1-25 | 12 Molybdo(VI)phosphoric acid hydrate | 1.0 | 404 | 410 | 0.985 |
| Comparative Example 1-1 | - | - | 410 | 410 | 1.000 |
| Comparative Example 1-2 | TiO(acac)₂ | 1.0 | 418 | 410 | 1.020 |
| Comparative Example 1-3 | Mn(acac)₂·2H₂O | 1.0 | 424 | 410 | 1.034 |
| Comparative Example 1-4 | Mn(acac)₃ | 1.0 | 490 | 410 | 1.195 |
| Comparative Example 1-5 | Cu(tmhd)₂ | 1.0 | 430 | 410 | 1.049 |
| Comparative Example 1-6 | Zn(acac)₂ | 1.0 | 513 | 410 | 1.251 |
| Comparative Example 2-1 | F₅PhNH₃(OTf) | 1.0 | 602 | 472 | 1.275 |
| Comparative Example 2-2 | Ph₂NH₂(OTf) | 1.0 | 652 | 472 | 1.381 |
| Comparative Example 2-3 | ZnTAC24 | 1.0 | 533 | 472 | 1.129 |

### <Application by Spin Coating Method and Rubbing Test>

THF suspensions were prepared using samples for evaluation of the powder coating material compositions of Examples 1-1 to 1-3 and Comparative Example 1-1. To each THF suspension, the catalyst in the amount specified in Table 1 with respect to 100 parts by weight of the powder coating material was added, then 200 parts by weight of THF (tetrahydrofuran) was added thereto, and the powder coating material and the catalyst were uniformly dispersed in THF, to prepare a THF suspension. One milliliter of the THF suspension was dropped onto an aluminum plate (44 × 66 × 0.2 mm), and applied thereto by a spin coating method (3000 rpm, 20 sec). The aluminum plate having the THE suspension applied was placed in an oven (160°C, 15 min) to cure the coating film, thereby forming a coating film on the aluminum plate. The thickness of the coating film was measured to be about 8 um. In addition, the catalyst can also be uniformly dispersed in the powder coating material by a method using the suspension in THF, and the curing promotion property of the catalyst can be favorably evaluated.

A rubbing test was performed on the samples of Examples 1-1 to 1-3 and Comparative Example 1-1, which had the coating film formed thereon, to evaluate the curability of the coating film. In the rubbing test, the surface of the coating film was rubbed with an absorbent cotton impregnated with xylene back and forth 50 times, then the state of the coating film was visually observed, and the evaluation was made according to the following evaluation criteria. The results are shown in Table 2.
2: Little change was found in the coating film.
1: Dissolution of the coating film was found in a region of less than 500 of the coating film.

**[Table 2]**

| | Catalyst | | Rubbing test (160°C, 15 min) |
|---|---|---|---|
| | Compound | Weight (%) | |
| Example 1-1 | MoO₂(acac)₂ | 1.0 | 2 |
| Example 1-2 | MoO₂(acac)₂ | 0.5 | 2 |
| Example 1-3 | MoO₂(acac)₂ | 0.2 | 2 |
| Comparative Example 1-1 | - | - | 1 |

The results demonstrated that samples for evaluation of the powder coating material compositions of the Examples had a relative curing time value of less than 1 as compared with the sample for evaluation of the powder coating material composition of Comparative Example, indicating that the curing of the powder coating material is promoted. In addition, the results demonstrated that the samples for evaluation of the powder coating material compositions of Examples exhibits higher curability at a lower temperature of about 160°C as compared with the sample for evaluation of the powder coating material composition of Comparative Example.

## Claims

1. A curing catalyst for promoting a reaction of a compound having a β-hydroxyalkylamide group with a carboxy-group-containing resin,
the curing catalyst comprising a compound including at least one selected from the group consisting of Mo, Cr, V, Fe, Co, Ni, Ga, Zr, In, Ba, Ce, and Bi as a metal atom.

2. The curing catalyst according to claim 1, wherein the curing catalyst is any one of a metal oxide, a metal sulfide, a chloride, a lithium salt, a sodium salt, a potassium salt, an ammonium salt, a phosphate salt, a silicate salt, an acetate salt or a hydrate thereof, wherein the metal oxide, the metal sulfide, the chloride, the lithium salt, the sodium salt, the potassium salt, the ammonium salt, the phosphate salt, the silicate salt, and the acetate salt comprise the metal atom.

3. A curing catalyst for promoting a reaction of a compound having a β-hydroxyalkylamide group with a carboxy-group-containing resin, wherein the curing catalyst comprises a metal complex having at least one metal atom selected from the group consisting of Mo, Cr, Al, V, Fe, Co, Ni, Ga, Zr, In, Ba, Ce, and Bi as a central metal, and wherein the metal complex has either of a ligand represented by formula (5) or 8-quinolinolato as a ligand, 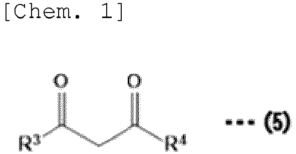 wherein in the formula (5), R³ and R⁴ each independently represent an alkyl group having 1 to 20 carbon atoms, an alkoxy group having 1 to 20 carbon atoms, an aryl group having 6 to 20 carbon atoms, an aryloxy group having 6 to 20 carbon atoms, an aralkyl group having 7 to 20 carbon atoms, or an aralkyloxy group having 7 to 20 carbon atoms.

4. The curing catalyst according to claim 3, wherein the ligand in the metal complex is any one of acetylacetonato, hexafluoroacetylacetonato, trifluoroacetylacetonato, 1,3-diphenyl-1,3-propanedionato, 2,2,6,6-tetramethyl-3,5-heptanedionato, 2,4-hexanedionato, 3,5-heptanedionato, 2-methylhexane-3,5-dionato, 6-methylheptane-2,4-dionato, 2,6-dimethylheptane-3,5-dionato, 2,2-dimethylhexane-3,5-dionato, methyl acetoacetate, ethyl acetoacetate, isopropyl acetoacetate, tert-butyl acetoacetate, methyl propionylacetate, ethyl propionylacetate, isopropyl propionylacetate, tert-butyl propionylacetate, methyl isobutyrylacetate, ethyl isobutyrylacetate, isopropyl isobutyrylacetate, tert-butyl isobutyrylacetate, methyl pivaloylacetate, ethyl pivaloylacetate, isopropyl pivaloylacetate, tert-butyl pivaloylacetate, or 8-quinolinolato.

5. The curing catalyst according to any one of claims 1 to 4, wherein the metal atom is Mo.

6. The curing catalyst according to claim 1, wherein the curing catalyst is molybdenum trioxide.

7. The curing catalyst according to claim 1, 2, 5 or 6, having a BET specific surface area of 1.0 m²/g or more.

8. The curing catalyst according to any one of claims 1 to 7, wherein the curing catalyst is for a powder coating material comprising a compound having a β-hydroxyalkylamide group and a carboxy-group-containing resin.

9. The curing catalyst according to any one of claims 1 to 8, wherein the carboxy-group-containing resin is a polyester resin having a carboxy group.

10. A resin composition comprising a compound having a β-hydroxyalkylamide group, a carboxy-group-containing resin, and the curing catalyst according to any one of claims 1 to 9.

11. The resin composition according to claim 10, comprising the curing catalyst in an amount of 0.01 to 30% by weight.

12. The resin composition according to claim 10 or 11, wherein the carboxy-group-containing resin is a polyester resin having a carboxy group.

13. A powder coating material composition comprising a compound having a β-hydroxyalkylamide group, a carboxy-group-containing resin, and the curing catalyst according to any one of claims 1 to 9.

14. A method for producing the powder coating material composition according to claim 13, wherein the method comprises a premix step, a melt-kneading step, a pulverization step, and a classification step, and
wherein in the premix step, the carboxy-group-containing resin, the compound having a β-hydroxyalkylamide group, and the curing catalyst are blended.

15. A coating method using a powder coating material, comprising applying the powder coating material composition according to claim 13 to an object to be coated, and curing the powder coating material composition by heating.
